# EUROPÄISCHE PATENTSCHRIFT

(11) **EP 3 456 906 B1**
(45) Veröffentlichungstag und Bekanntmachung des Hinweises auf die Patenterteilung: **07.04.2021**
(21) Anmeldenummer: 18187061.9
(22) Anmeldetag: 02.08.2018
(51) Int. Cl.: E05B 79/06, E05B 63/00, F16B 5/02, E05B 17/06

(54) **FAHRZEUGTÜR MIT EINER AUSSENGRIFFEINHEIT UND VERFAHREN ZU DEREN MONTAGE**
VEHICLE DOOR WITH AN OUTSIDE HANDLE UNIT AND METHODS OF ASSEMBLING THE SAME
PORTE DE VÉHICULE POURVU D'UNITÉ DE PRÉHENSION EXTÉRIEURE ET SON PROCÉDÉ DE MONTAGE

(30) Priorität: 14.09.2017 DE 102017008652
(43) Veröffentlichungstag der Anmeldung: 20.03.2019
(73) Patentinhaber: HUF Hülsbeck & Fürst GmbH & Co. KG, 42551 Velbert (DE)
(72) Erfinder: HEYDUCK, Jan, 71069 Sindelfingen (DE); JOOSS, Jürgen, 71032 Böblingen (DE); LINDMAYER, Martin, 72172 Sulz (DE); REIFENBERG, Bernd, 45259 Essen (DE); RHEIN, Michael, 41199 Mönchengladbach (DE)
(74) Vertreter: Zenz Patentanwälte Partnerschaft mbB

(56) Entgegenhaltungen:
- WO-A1-2017/211550
- DE-A1-102008 035 059
- DE-A1-102012 221 228
- DE-A1-102015 011 744
- DE-A1-102015 209 851

## Beschreibung

Die Erfindung betrifft eine Fahrzeugtür für ein Kraftfahrzeug mit einer Außengriffeinheit, die ein Trägerteil und einen Griffbügel umfasst, wobei das Trägerteil von innen an der Rohbautür fixierbar ist und die Rohbautür einen Durchbruch für den Griffbügel aufweist, wobei zwischen Trägerteil und Rohbautür Ausgleichselemente zum Toleranzausgleich in drei Achsen vorgesehen sind, wobei am Umfang des Trägerteils mehrere Ausgleichselemente angeordnet sind, ferner innenseitig an der Rohbautür eine Fixierplatte angebracht ist, wobei die Fixierplatte einen Durchbruch für den Griffbügel sowie mehrere, mit Innengewinden versehene, zu den Ausgleichelementen fluchtende Fixierstellen aufweist, wobei die Ausgleichselemente ausgebildet sind, mittels einer einzudrehenden Fixierschraube sowohl eine Ausgleichsbewegung in Y-Richtung als auch durch schwimmende Lagerung einen Ausgleich in X- und Z-Richtung zu ermöglichen. Die Erfindung betrifft ferner ein Montageverfahren sowie ein mit einer solchen Fahrzeugtür versehenes Kraftfahrzeug.

Eine Fahrzeugtür der vorstehend genannten Art ist zum Beispiel aus der DE 10 2008 035 059 A1 und der nicht vorveröffentlichten WO 2017/211550 A1 bekannt.

Ferner ist aus der DE 10 2015 209 851 A1 eine Fahrzeugtür mit einer Außengriffeinheit bekannt. Aus der DE 10 2012 221 228 A1 ist ferner ein Ausgleichselement für zwei miteinander im Abstand zu fixierende Bauteile bekannt.

Bisher wird die Außengriffeinheit in zwei Arbeitsschritten an der Fahrzeugtür befestigt. Das Trägerteil zusammen mit einem Türschloss wird von der Türinnenseite befestigt. Anschließend wird von außen der Griffbügel montiert, wobei aufgrund von Fertigungstoleranzen bei der Fertigung des Trägerteils nachträglich ein Toleranzausgleich erforderlich ist, insbesondere da der Griffbügel mit geringem umlaufendem Spalt in dem Durchbruch der Rohbautür montiert ist und damit bereits kleine Spaltabweichungen bemerkbar sind. Ein Toleranzausgleich in den X-, Y- und Z-Richtungen (die X-Richtung ist die Fahrtrichtung, die Y-Richtung ist horizontal quer dazu, die Z-Richtung ist die Vertikalrichtung) ist daher erforderlich und erfordert entsprechende Montagezeit.

Aufgabe der Erfindung ist es, die Montage der Außengriffeinheit an der Fahrzeugtür zu vereinfachen.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe wird hinsichtlich der Fahrzeugtür dadurch gelöst, dass an dem Trägerteil seitlich des Griffbügels am Umfang verteilt 3 oder 4 Ausrichtungsvorsprünge zum Anstoßen an einer Türbeplankung ausgebildet sind, und dass jedes Ausgleichselement ein mit dem Trägerteil verbundenes hohlzylindrisches Grundelement sowie eine damit in Gewindeeingriff stehende Fixierhülse aufweist, die über ein Federelement mit der Fixierschraube in Reibeingriff steht, so dass ein Drehen der Fixierschraube eine Bewegung der Fixierhülse gegen die Fixierplatte bewirkt und ein Weiterdrehen der Fixierschraube einen Schraubenkopf rückseitig gegen das Trägerteil zu dessen Fixierung drückt.

Hinsichtlich des Montageverfahrens für eine Außengriffeinheit an einer Fahrzeugtür wird die Aufgabe durch folgende Verfahrensschritte gelöst:
- die Außengriffeinheit mit dem Griffbügel wird von der Türinnenseite durch den Durchbruch in der Fixierplatte und in der Rohbautür gesteckt, bis diese an der Rohbautür anstößt,
- eine Ausrichtungsschablone wird von der Türaußenseite in einen Spalt zwischen dem Griffbügel und dem Rand des Durchbruchs in der Türbeplankung eingebracht,
- die Fixierschrauben der Ausgleichselemente werden mit den Innengewinden an der Fixierplatte in Eingriff gebracht,
- die Fixierschrauben werden festgezogen.

Diese Ausbildungen ermöglichen es, die komplette Außengriffeinheit mit dem bereits montierten Griffbügel in einem Arbeitsgang von der Türinnenseite aus zu fixieren und gleichzeitig dabei einen Toleranzausgleich in allen drei Achsen (X, Y, Z) durchzuführen. Damit vereinfacht sich die Montage der Außengriffeinheit.

Die Rohbautür muss dazu lediglich mit der Fixierplatte mit Innengewinden für die Ausgleichselemente ausgestattet sein, was bei der Türfertigung erfolgt. Die Innengewinde können dabei an der Fixierplatte angeformt (durch Blechverformung) oder angeschweißt sein.

In Y-Richtung ist durch den einen Anschlag der Außengriffeinheit an der Rohbautür eine definierte Positionierung erfolgt, durch das Verstellen der Fixierschrauben der Ausgleichselemente wird sowohl der Toleranzausgleich des Trägerteils in allen drei Richtungen dadurch erzielt, dass die Ausgleichselemente schwimmend an dem Trägerteil angebracht sind, wobei durch die griffbügelseitige Ausrichtungsschablone ein konstanter Ringspalt zwischen dem Griffbügel und dem Durchbruch in der Außenbeplankung gewährleistet ist.

Drei Ausgleichselemente, also Befestigungspunkte für die Außengriffeinheit, sind normalerweise ausreichend.

Gemäß der Erfindung sind an dem Trägerteil seitlich des Griffbügels am Umfang verteilt 3 oder 4 Ausrichtungsvorsprünge zum Anstoßen an einer Türbeplankung ausgebildet. Diese sind dicht am Griffbügel angeordnet und haben eine solche Erstreckung, dass diese durch den Durchbruch in der Fixierplatte hindurch bis auf eine Türbeplankung der Fahrzeugtür reichen und damit eine exakte Ausrichtung in Y-Richtung ermöglichen, da keine weiteren Bauteile mit Toleranzen mehr vorhanden sind und die Y-Ausrichtung ja bezüglich der Türbeplankung erforderlich ist, damit die Außenfläche des Griffbügels zur Außenseite der Türbeplankung bündig sein soll.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Figur 1:: eine Ansicht einer Außengriffeinheit
- Figur 2:: eine Ansicht einer Rohbautür von der Innenseite
- Figur 3:: eine Schnittdarstellung durch ein Ausgleichselement

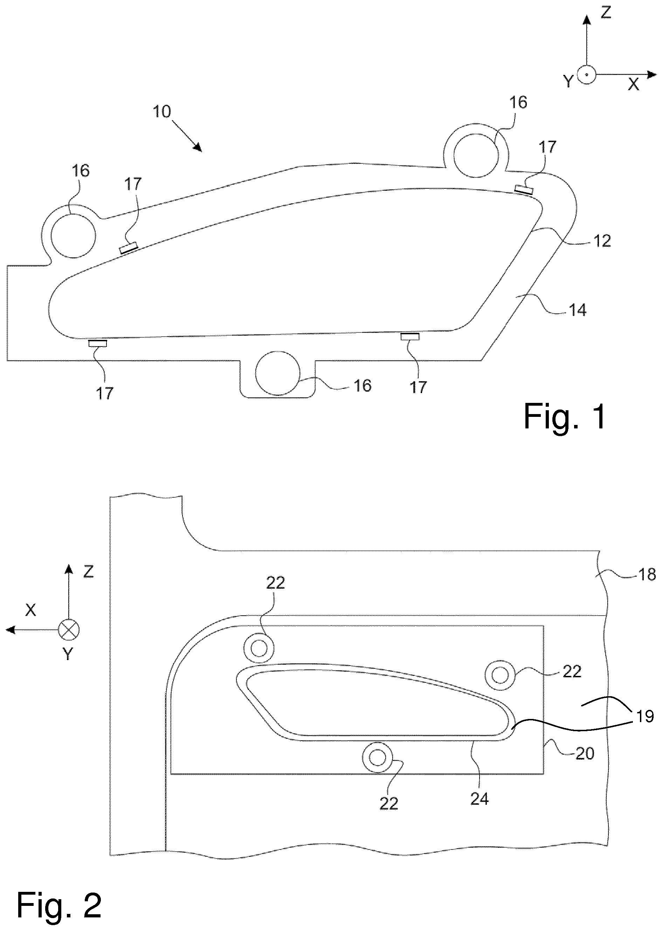

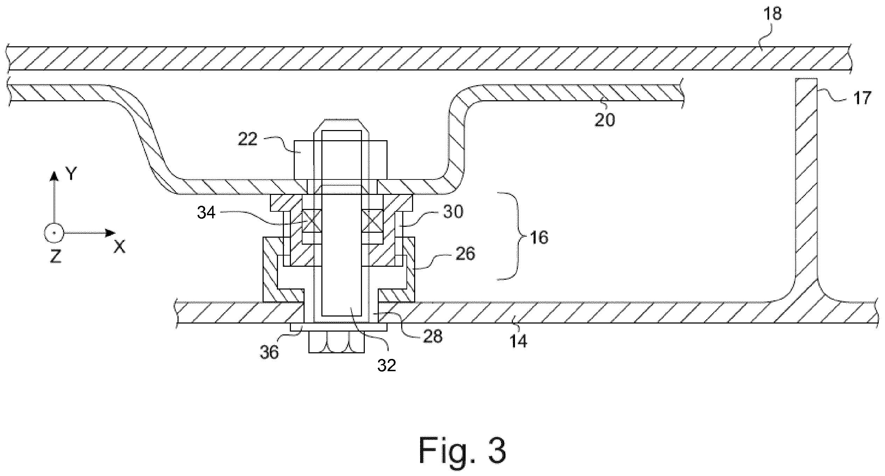

In Figur 1 ist eine Außengriffeinheit 10 in einer Ansicht von Außen schematisch dargestellt, die einen Griffbügel 12 und ein Trägerteil 14 umfasst, in dem eine nicht dargestellte Mechanik und ein Servoantrieb für ein mittels eines Bowdenzuges damit verbundenes Türschloss untergebracht sind. Sofern es sich um die Fahrertür handelt, ist auch eine nicht gezeigte Schließzylindereinheit darin enthalten. Am Umfang des Trägerteils 14 sind eine Anzahl (vorliegend 3, es kann jedoch auch eine andere Anzahl sein) Ausgleichselemente 16 angebracht, die in Figur 3 näher dargestellt sind. Die Ausgleichselemente 16 können vorher mittels einer Rastnasenverbindung oder auf andere Weise am Trägerteil 14 angebracht sein. Ferner sind am Trägerteil 14 den Griffbügel umgebend drei oder vier Ausrichtungsvorsprünge 17 angebracht oder angeformt, die möglichst in der Nähe der Ausgleichselemente 16 liegen sollten. Diese haben eine Erstreckung in Y-Richtung von einigen Millimetern und dienen dazu, einen Kontakt mit der Innenseite einer in Figur 2 gezeigten Türbeplankung 19 herzustellen.

In Figur 2 ist eine Rohbautür 18 von der Innenseite her gezeigt, die eine Türbeplankung 19 aufweist. An dieser ist eine als Verstärkungsblech ausgebildete Fixierplatte 20, beispielsweise mittels Punktschweißen fixiert. Die Fixierplatte 20 umfasst Gewindehülsen 22, die mit der Fixierplatte 20 verschweißt sind und Innengewinde für die Ausgleichselemente 16 definieren. Anstelle von Gewindehülsen 22 können auch Schraubenmuttern verwendet werden oder die Innengewinde werden in der aus Blech gefertigten Fixierplatte 20 geformt. Die Fixierplatte 20 weist einen Durchbruch 24 auf, der vorzugsweise der Umrisskontur des Griffbügels 12 entspricht allerdings so weit größer ist, dass die Ausrichtungsvorsprünge 17 hindurch reichen und gegen die unter dem Durchbruch 24 sichtbare Türbeplankung 19 gelangen können und im Zuge der Montage der Außengriffeinheit 10 deren Griffbügel 12 ohne Gefahr einer Beschädigung durch den Durchbruch 24 gesteckt werden kann. Die Türbeplankung 19 weist ebenfalls einen Durchbruch auf, der der Umrisskontur des Griffbügels 12 zuzüglich eines konstanten Spaltes von vorzugsweise 0,5 - 1mm entspricht.

In Figur 3 ist eine Ausführungsform für das Ausgleichselement 16 in einer Schnittdarstellung dargestellt. Dieses umfasst ein Grundelement 26, das über nicht dargestellte Fixiermittel, beispielsweise eine Rastnasenverbindung am Trägerteil 14 abgebracht ist und eine derartig große Bohrung 28 aufweist, dass zunächst eine schwimmende Bewegung zwischen Trägerteil 14 und Grundelement 26 in der X-Z-Ebene möglich ist. Das Grundelement 26 ist über eine Schraubverbindung mit einer Fixierhülse 30 in Eingriffsverbindung.

Eine Fixierschraube 32 befindet sich über eine Federverbindung 34 in Reibeingriff mit der Fixierhülse 30 und nimmt diese beim Hereinschrauben zunächst mit, wobei die Fixierhülse 30 über das Gewinde im Grundelement 26 in Y-Richtung zu der Fixierplatte 20 mitgenommen wird. Sobald die Fixierhülse 30 an der Fixierplatte 20 anstößt geht die Federverbindung 34 außer Eingriff und die Fixierschraube 32 geht in Eingriff mit der Gewindehülse 22. Die Fixierschraube 32 lässt sich so lange weiter in die Gewindehülse 22 einschrauben, bis ein Schraubenkopf 36 gegen das Trägerteil 14 stößt. Bis zu diesem Zeitpunkt ist eine Verschiebung der Außengriffeinheit 10 relativ zu der Fixierplatte 20 in der X-Z-Ebene möglich.

Zur Montage der Außengriffeinheit 10 wird diese mit dem Griffbügel 12 von der Türinnenseite durch den Durchbruch 24 in der Fixierplatte 20 und den Durchbruch in der Türbeplankung 19 gesteckt, bis die Ausrichtungsvorsprünge 17 innen an der Türbeplankung 19 anstoßen. Als nächstes wird eine nicht gezeigte Ausrichtungsschablone von der Türaußenseite in einen Spalt zwischen dem Griffbügel 12 und dem Rand des Durchbruchs in der Türbeplankung 19 eingebracht, wodurch die Außengriffeinheit in der X-Z-Ebene eingepasst wird. Als nächstes werden die Fixierschrauben 32 der Ausgleichselemente 16 mit den Innengewinden 22 an der Fixierplatte 20 in Eingriff gebracht, wodurch sich die über Reibschluss damit verbundenen Fixierhülsen 30 gegen die Fixierplatte 20 bewegen. Ein Festziehen der Fixierschraube 32 mit einem vorgegebenen Drehmoment in der Gewindehülse 22 verspannt das Trägerteil 14 über das Grundelement 26 und die Fixierhülse 30 mit der Fixierplatte 20.

## Patentansprüche

1. Fahrzeugtür (18) für ein Kraftfahrzeug mit einer Außengriffeinheit (10), die ein Trägerteil (14) und einen Griffbügel (12) umfasst, wobei das Trägerteil (14) von innen an der Rohbautür (18) fixierbar ist und die Rohbautür (18) einen Durchbruch für den Griffbügel (12) aufweist, wobei zwischen Trägerteil (14) und der Rohbautür (18) Ausgleichselemente (16) zum Toleranzausgleich in drei Achsen (X-Y-Z) vorgesehen sind,
wobei am Umfang des Trägerteils (14) mehrere Ausgleichselemente (16) angeordnet sind, ferner innenseitig an der Rohbautür (18) eine Fixierplatte (20) angebracht ist,
wobei die Fixierplatte (20) einen Durchbruch (24) für den Griffbügel (12) sowie mehrere, mit Innengewinden versehene, zu den Ausgleichelementen (16) fluchtende Fixierstellen (22) aufweist,
wobei die Ausgleichselemente (16) ausgebildet sind, mittels einer einzudrehenden Fixierschraube (32) sowohl eine Ausgleichsbewegung in Y-Richtung als auch durch schwimmende Lagerung einen Ausgleich in X- und Z-Richtung zu ermöglichen,
**dadurch gekennzeichnet, dass**
an dem Trägerteil (14) seitlich des Griffbügels (12) am Umfang verteilt 3 oder 4 Ausrichtungsvorsprünge (17) zum Anstoßen an einer Türbeplankung (19) ausgebildet sind, und
dass jedes Ausgleichselement (16) ein mit dem Trägerteil (14) verbundenes hohlzylindrisches Grundelement (26) sowie eine damit in Gewindeeingriff stehende Fixierhülse (30) aufweist, die über ein Federelement (34) mit der Fixierschraube (32) in Reibeingriff steht, so dass ein Drehen der Fixierschraube (32) eine Bewegung der Fixierhülse (30) gegen die Fixierplatte (20) bewirkt und ein Weiterdrehen der Fixierschraube (32) einen Schraubenkopf (36) rückseitig gegen das Trägerteil (14) zu dessen Fixierung drückt.

2. Fahrzeugtür nach Anspruch 1, **dadurch gekennzeichnet, dass** drei oder vier Ausgleichselemente (16) vorgesehen sind.

3. Fahrzeugtür nach Anspruch 1, **dadurch gekennzeichnet, dass** die Innengewinde an der Fixierplatte (20) durch befestigte Schraubenmuttern oder Gewindehülsen (22) gebildet sind.

4. Fahrzeugtür nach Anspruch 3, **dadurch gekennzeichnet, dass** die Schraubenmuttern oder Gewindehülsen (22) an der Fixierplatte (20) angeschweißt sind.

5. Fahrzeugtür nach einem der vorherigen Ansprüche, **dadurch gekennzeichnet, dass** der Durchbruch in der Rohbautür der Umrisskontur des Griffbügels (12) zuzüglich eines konstanten engen Spaltmaßes von 0,5 - 1mm entspricht.

6. Fahrzeugtür nach einem der vorherigen Ansprüche, **dadurch gekennzeichnet, dass** der Durchbruch (24) in der Fixierplatte (20) der Umrisskontur des Griffbügels (12) zuzüglich eines konstanten Spaltes von 3mm bis 10mm entspricht.

7. Verfahren zur Montage einer Außengriffeinheit (10) an einer Fahrzeugtür nach einem der vorherigen Ansprüche, **gekennzeichnet, durch** folgende Schritte:
- die Außengriffeinheit (10) wird mit dem Griffbügel (12) von der Türinnenseite durch den Durchbruch (24) in der Fixierplatte (20) und den Durchbruch in der Rohbautür (18) gesteckt,
- eine Ausrichtungsschablone wird von der Türaußenseite in einen Spalt zwischen dem Griffbügel und dem Rand eines Durchbruchs in der Türbeplankung (19) eingebracht,
- die Fixierschrauben (32) der Ausgleichselemente (16) werden mit den Innengewinden (22) an der Fixierplatte (20) in Eingriff gebracht,
- die Fixierschrauben (32) werden festgezogen.

8. Verfahren nach Anspruch 7, **dadurch gekennzeichnet, dass** ein mit der Außengriffeinheit (10) mechanisch über einen Bowdenzug verbundenes Türschloss vor Montage der Außengriffeinheit (10) an der Fahrzeugtür (18) befestigt und der Bowdenzug eingehängt wird.

9. Kraftfahrzeug, **dadurch gekennzeichnet, dass** dieses mindestens eine Fahrzeugtür nach einem der Ansprüche 1 bis 6 umfasst.

## Claims

1. A vehicle door (18) for a motor vehicle, having an external handle unit (10) which includes a support part (14) and a handle (12), wherein the support part (14) is fixable to the shell door (18) from the inside, and the shell door (18) has an opening for the handle (12), wherein compensating elements (16) are provided between the support part (14) and the shell door (18) to ensure tolerance compensation in three axes (X-Y-Z),
wherein a plurality of compensating elements (16) are arranged on the circumference of the support part (14), a fixing plate (20) is additionally attached to the interior side of the shell door (18),
wherein the fixing plate (20) has an opening (24) for the handle (12) and a plurality of fixing points (22) provided with internal threads which are aligned with the compensating elements (16),
wherein the compensating elements (16) are embodied to permit, by means of a fixing screw (32) that is to be screwed in, both a compensating movement in the Y direction, and, due to a floating mounting, a compensation in the X and Z directions,
**characterized in that**
3 or 4 alignment projections (17) designed to abut a door cladding panel (19) are arranged at intervals around the circumference of the support part (14) on the side of the handle (12), and
that each compensating element (16) has a hollow cylindrical base element (26) which is connected to the support part (14) and a fixing sleeve (30) which is in threaded engagement therewith, and which is in frictional engagement with the fixing screw (32) via a spring element (34), so that a rotation of the fixing screw (32) causes a movement of the fixing sleeve (30) towards the fixing plate (20), and a further rotation of the fixing screw (32) presses a screw head (36) against the back of the support part (14) for fixing thereof.

2. The vehicle door according to Claim 1, **characterized in that** three or four compensating elements (16) are provided.

3. The vehicle door according to Claim 1, **characterized in that** the internal threads on the fixing plate (20) are formed by fastened screw nuts or threaded sleeves (22).

4. The vehicle door according to Claim 3, **characterized in that** the screw nuts or threaded sleeves (22) are welded onto the fixing plate (20).

5. The vehicle door according to any one of the preceding claims, **characterized in that** the opening in the shell door matches the peripheral contour of the handle (12) plus a constantly tight gap dimension of 0.5 - 1 mm.

6. Vehicle door according to any one of the preceding claims, **characterized in that** the opening (24) in the fixing plate (20) matches the peripheral contour of the handle (12) plus a constantly tight gap of 3 mm to 10 mm.

7. A method for assembling an external handle unit (10) to a vehicle door according to any one of the preceding claims, **characterized by** the following steps:
- the external handle unit (10) is inserted with the handle (12) through the opening (24) in the fixing plate (20) and the opening in the shell door (18) from the inner side of the door,
- an alignment jig is introduced from the outer side of the door into a gap between the handle and the edge of an opening in the door cladding panel (19),
- the fixing screws (32) of the compensating elements (16) are brought into engagement with the internal threads (22) on the fixing plate (20),
- the fixing screws (32) are tightened.

8. The method according to Claim 7, **characterized in that** a door lock which is mechanically connected to the external handle unit (10) via a Bowden cable is fastened before the external handle unit (10) is assembled with the vehicle door (18) and the Bowden cable is installed.

9. A motor vehicle, **characterized in that** it includes at least one vehicle door according to any one of Claims 1 to 6.

## Revendications

1. Porte de véhicule (18) pour un véhicule automobile, pourvue d'une unité de préhension extérieure (10), qui comprend une pièce de support (14) et un étrier de préhension (12), sachant que la pièce de support (14) peut être fixée de l'intérieur sur la structure brute de porte (18) et la structure brute de porte (18) comporte un passage pour l'étrier de préhension (12), sachant qu'entre la partie de support (14) et la structure brute de porte (18) sont prévus des éléments de compensation (16) pour la compensation de tolérance dans trois axes (X-Y-Z),
sachant que plusieurs éléments de compensation (16) sont disposés sur la périphérie de la pièce de support (14), qu'une plaque de fixation (20) est montée en plus du côté intérieur sur la structure brute de porte (18),
sachant que la plaque de fixation (20) comporte un passage (24) pour l'étrier de préhension (12) ainsi que plusieurs points de fixation (22) dotés de filetages intérieurs, en alignement avec les éléments de compensation (16),
sachant que les éléments de compensation (16) sont constitués pour permettre tant un mouvement de compensation en direction Y au moyen d'une vis de fixation (32) à visser qu'une compensation par positionnement flottant dans la direction X et Z,
**caractérisée en ce que**
sur la pièce de support (14), 3 ou 4 saillies d'orientation (17) réparties sur la périphérie latéralement à l'étrier de préhension (12) sont constituées pour venir aboutir sur un revêtement de porte (19) et
**en ce que** chaque élément de compensation (16) comporte un élément de base (26) cylindrique creux relié à la pièce de support (14) ainsi qu'un manchon de fixation (30) venant en prise de filetage, qui est en prise par frottement avec la vis de fixation (32) par le biais d'un élément faisant ressort (34) de telle manière qu'une rotation de la vis de fixation (32) entraîne un mouvement du manchon de fixation (30) contre la plaque de fixation (20) et qu'en continuant la rotation de la vis de fixation (32), une tête de vis (36) appuie à l'arrière contre la pièce de support (14) pour la fixation de celle-ci.

2. Porte de véhicule selon la revendication 1, **caractérisée en ce que** trois ou quatre éléments de compensation (16) sont prévus.

3. Porte de véhicule selon la revendication 1, **caractérisée en ce que** les filetages intérieurs sur la plaque de fixation (20) sont formés par des écrous ou des manchons filetés fixés (22).

4. Porte de véhicule selon la revendication 3, **caractérisée en ce que** les écrous ou manchons filetés (22) sont soudés à la plaque de fixation (20).

5. Porte de véhicule selon l'une quelconque des revendications précédentes, **caractérisée en ce que** le passage dans la structure brute de porte correspond au profil du contour de l'étrier de préhension (12) en plus d'une cote d'interstice étroite constante de 0,5 - 1 mm.

6. Porte de véhicule selon l'une quelconque des revendications précédentes, **caractérisée en ce que** le passage (24) dans la plaque de fixation (20) correspond au profil de contour de l'étrier de préhension (12) en plus d'un interstice constant de 3 mm à 10 mm.

7. Procédé de montage d'une unité de préhension extérieure (10) sur une porte de véhicule selon l'une quelconque des revendications précédentes, **caractérisé par** les étapes suivantes :
- l'unité de préhension extérieure (10) est emboîtée avec l'étrier de préhension (12) depuis le côté intérieur de porte à travers le passage (24) dans la plaque de fixation (20) et à travers le passage dans la structure brute de porte (18),
- un gabarit d'orientation est introduit du côté intérieur de porte dans un interstice entre l'étrier de préhension et le bord d'un passage dans le revêtement de porte (19),
- les vis de fixation (32) des éléments de compensation (16) sont mises en prise avec les filetages intérieurs (22) sur la plaque de fixation (20),
- les vis de fixation (32) sont serrées à fond.

8. Procédé selon la revendication 7, **caractérisé en ce qu'**une serrure de porte reliée mécaniquement à l'unité de préhension extérieure (10) par le biais d'un câble Bowden est fixée sur la porte de véhicule (18) et le câble Bowden est accroché avant montage de l'unité de préhension extérieure (10).

9. Véhicule, **caractérisé en ce que** celui-ci comprend au moins une porte de véhicule selon l'une quelconque des revendications 1 à 6.
